# EUROPEAN PATENT SPECIFICATION

(11) **EP 0 332 602 B1**
(45) Date of publication and mention of the grant of the patent: **02.06.1993**
(21) Application number: 89870037.2
(22) Date of filing: 06.03.1989
(51) Int. Cl.: B29C 63/04, B29C 63/00, B65H 20/20, B65H 20/16

(54) **Procedure for coating elements consisting in expanded plastic**
Verfahren zur Beschichtung von Schaumkunststoffelementen
Procédé pour le revêtement d'éléments en plastique expansé

(30) Priority: 07.03.1988 BE 8800253
(43) Date of publication of application: 13.09.1989
(73) Proprietor: POLYSIERTEGELS, Naamloze Vennootschap, 2578 Koningshooikt (BE)
(72) Inventor: Wouters, Lucas Jean Jozef, B-2860 O.L.V. Waver (St. Kat. Waver) (BE)
(74) Representative: Donné, Eddy

(56) References cited:
- CH-A- 565 025
- DE-A- 2 423 845
- DE-A- 2 725 356
- GB-A- 1 036 982
- GB-A- 2 100 191
- LU-A- 56 731
- US-A- 3 611 479
- US-A- 4 402 778
- PATENT ABSTRACTS OF JAPAN, vol. 10, no. 33 (M-452)(2090), February 8, 1986; & JP-A-60 187533 (Tounen Sekiyu Kagaku K.K.) 25-09-1985
- "Kunststoffhalbzeug-Verarbeitung und -Schweissung", W. Schrader, VEB Deutscher Verlag für Grundstoffindustrie, Leipzig, 1983, S. 295

## Description

The present invention concerns a procedure for coating elements consisting in expanded plastic, also named foam plastic.

As known, expanded plastic, such as for instance polystyrene, polyethylene and other similar materials, are obtained in various applications. Examples of it can be found in great numbers in the insulation technology, the packaging industry and in the decoration techniques.

That objects and elements produced in expanded plastic are quite vulnerable, show little strength and are difficult to clean due to their porous properties is a known fact.

Present invention aims at a procedure for coating elements in expanded plastic, in such way that the produced products do not have aforementioned disadvantages any more. In this way, a tougher plastic layer is applied to the surface of the elements in expanded plastic and in such a manner that, between the coating material layer and the element to be coated, a solid, practically unbreakable, connection is created.

The products obtained according to the invention thus also have the advantage that they are sturdier than those products which are not provided with aforementioned coating. The strength reveals itself primarily by a substantial surface hardness, an increased breaking strength and an improved portative power. This, in turn, shows the advantage that the obtained products enjoy a longer lifespan.

Present invention also aims at a procedure in which the application of the layer of coating material on the element two be coated occurs in such way that the constantly appearing grain shaped structure of the expanded plastic does not or seldom show in the applied layer of coating material, due to which latter remains smooth, with the advantage that the obtained products are easier to be wet cleaned and that dirt does not adhere to such an extent to the coating's surface.

The procedure according to the invention has, moreover, the advantage that the elements in expanded plastic can be provided with a coating of any colour.

Finally, it is to be noted that the inventions aims as well at increasing the number of applications in expanded plastic, or so-called foam plastic. Other aims and advantages will appear from further descriptions.

From document LU-A-0.056.731 it is known to provide panels of a coating in plastic material in which a thermosetting plastic is applied against the material to be coated, whereafter the plastic is heated such that a thermosetting process is carried out. At the end of the process the plastic coating is hard an maintains the form of the product which has been coated. As the form extends around the coated product and furthermore is in an inflexible state, it remains in position around the coated product.

According to LU-A-0.056.731 the product and the coating are not melted together, and consequently after ending the process there is no adhesive force between the product to be coated and the coating.

From the document "Kunststoffhalbzeug-Verarbeitung und -Sweissung, W.Scharder and W.Pannier, VEB Leipzig, 1954.", it is known to melt two layers of plastic material together by placing the first layer on the second, and by pressing both layers together by means of a heated pressing element. This method however is not apt for coating of expanded materials.

The present invention provides in a process for coating elements in expanded materials, providing a coating which is firmly attached to said elements.

To this end the invention concerns a procedure for coating an expanded plastic element comprising the steps of heating a coating layer consisting of the same but non expanded material as said plastic element; pressing the heated layer to the expanded plastic element in such a way that the cooperating surfaces melt together forming a composite element; and cooling said composite element.

The fact that the same basic material is chosen for the expanded element and the non expanded layer offers the advantage that the melting points of the element to be coated and of the coating layer are the same and consequently an optimal melting effect can be obtained. By heating the coating material at its contact side to the melting point and bringing it in contact with the expanded element, the latter at Its surface also reaches a temperature equal to the melting point, and consequently both materials, from the coating and from the element to be coated, mix with each other at their surface and become unified in an optimal manner.

More particularly, present invention aims herewith at the coating of stratified elements, such as sheets and similar. An additional aims consists in that the coating of such sheets can be achieved efficiently by means of a continuous process. In a particular embodiment, the pressing of a layer of coating material against the element to be coated occurs by bringing the heated layer by means of a continuously progressing movement in contact with one or more elements in expanded plastic to be coated. More so, according to the invention, the heated layer is being rolled on these elements, which offers the special advantage that finished products with a very smooth surface are obtained in which the grain shaped structure of the expanded material on its exterior surface becomes virtually invisible. In order to provide for a continuous process, the layer of coating material is herewith being taken from a reel, while the expanded elements consist in sheets which are being supplied in sequence.

According to a particular embodiment the sheets are being coated on both sides by applying aforementioned method, which offers the advantage that the finished product, according to present invention as well, can be separated in any length, regardless of the locations in which the used sheets of expanded material connect with one another.

In a particular adaptation of the invention, the applied layer of coating material is being chosen wider than the elements, respectively sheets, to be coated, and the coating material is being folded over the edges of the sheets to be coated while it is still hot, in such way that the finished product obtains a finished appearance as well as shockproof edges.

According to a variant in the procedure according to the invention, wooden strips are being provided at the edges of the sheets to be coated during aforementioned continuous process, in such way that the layer of coating material is being bent over these and that strips are affixed.

Present invention shows the advantage that such products may be manufactured rapidly in large quantities.

In all aforementioned embodiments, the layer of coating material will preferably be heated until softening, whereupon it immediately is pressed against the element, for instance a sheet, to be coated. As a material for the elements to be coated one will preferably choose an expanded plastic within the types of insulation material, more particularly materials such as expanded polystyrene, expanded polyethylene or similar expanded materials.

In order to better show the characteristics of the invention a preferred embodiment of such a device is described hereafter as an example with reference to the attached drawings, in which :
Figure 1 shows a device for carrying out the procedure of the invention ;
figure 2 shows, at a larger scale, the part which is indicated by F2 in figure 1 ;
figures 3 and 4 show cross sections, respectively according to lines III-III and IV-IV, in figure 2 ;
figure 5 shows a view according to arrow F5 in figure 1 ;
figure 6 shows a cross section according to line VI-VI in figure 5 ;
figures 7 and 8 show cross sections, respectively according to lines VII-VII and VIII-VIII in figure 6;
figure 9 schematically shows a rear view of the device in figure 1 ;
figure 10 shows the connection diagram of the electric heating elements ;
figure 11 shows a cutting device which can be used together with the device according to figure 1 ;
figures 12 and 13 show views according to arrow F12 in figure 11 for two different positions ;
figure 14 schematically shows a variant of said device;
figure 15 shows a particular product obtained according to the procedure of the invention;
figure 16 shows a part of a device, as it can be used in combination with the device in figure 1, particularly for the sawing off of the edges of the product according to figure 15.

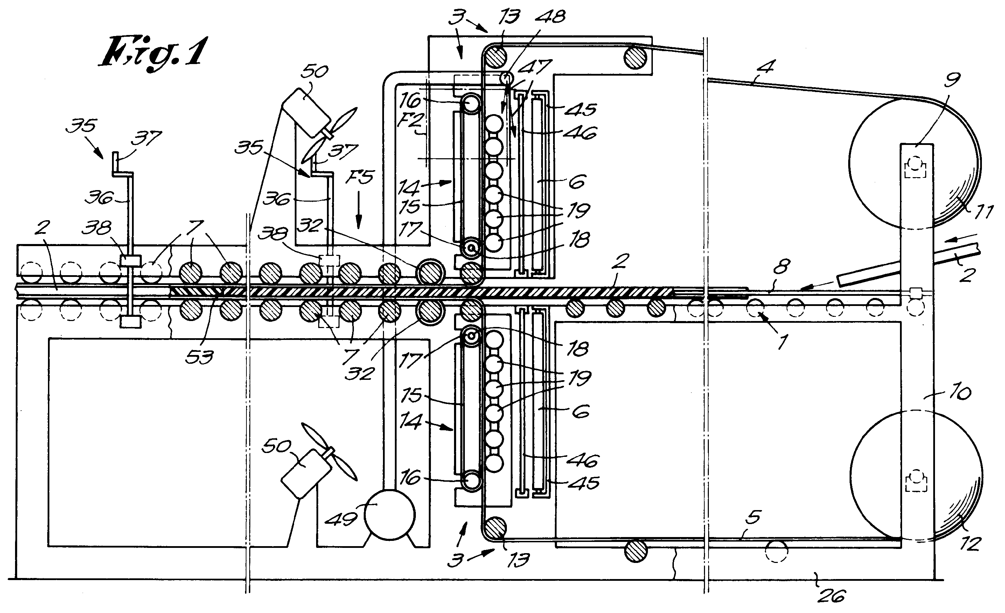

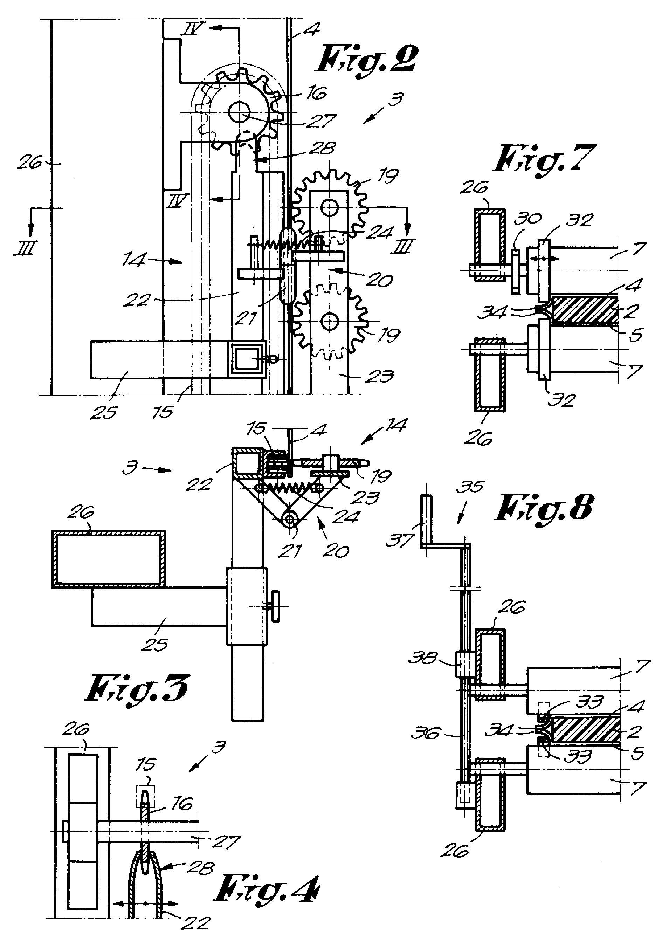

The device for carrying out the procedure of the invention mainly consists in a track 1, preferably a roller track, for the supply of elements in expanded plastic, primarily sheets 2 ; means 3 to supply one or more layers of coating material, respectively 4 and 5 ; heating means 6 for the respective heating up of aforementioned layers 4 and 5 ; rollers 7 to press the heated layer of coating material 4-5 against sheets 2 by rolling and driving means which will be further described hereafter. Even though a device is shown in figure 1 in which, at both sides of sheet 2, a layer of coating material is applied; it is obvious that the procedure can be carried out with one layer 4 or 5 only, in such way that a variant of the device according to the invention can also exclusively consist in the upper or lower part of the machine represented in figure 1.

The sheets supply track 1 is preferably equipped with guides 8 adjustable in width.

The means 3 for the supply of layers 4-5 mainly consist in reel supports 9 and 10 on which reels 11 and 12 with the concerned coating material can be placed, a number of folding cylinders 13 and driven guiding means 14. Each of these guiding means 14 consists, as shown in figures 1 through 4, mainly in a continuous chain 15 which is guided over two sprocket wheels 16 and 17, in which sprocket wheel 17 is mounted on a driven shaft 18, and free rotating sprocket wheels 19 which are being pushed towards the free parts of the chain 15 by means of tensioning means 20. Such guiding means 14 are placed at both edges of layers 4 and 5 in such way that the layers are guided between chain 5 and the free rotating sprocket wheels 19, be clamped between them and transported along the heating means 6 by the chain's 15 movement. The sprocket wheels 19 press the layers 4-5 locally in the apertures of the chain links in the chains 15.

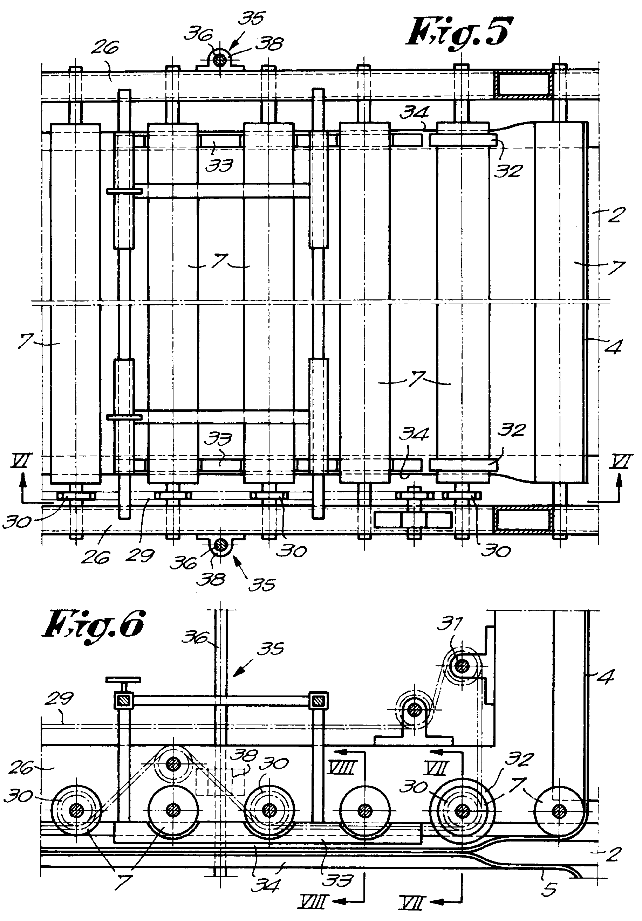

As shown in the detailed drawings according to figures 2 and 3, the tensioning means 20 mainly consist in universal joints 21 which, on the one hand, are installed on a fixed frame section 22 and which, on the other hand, carry a movable frame section 23 on which the free rotating sprocket wheels 19 are installed, as well as in draw springs 24 which provide the required stretching force.

The complete device is preferably provided with width adjusting means in such way that sheets and coating materials of different widths can be processed. As shown in figure 3, the aforementioned frame sections 22 and 23 are slidable and adjustable in a support 25 which is linked with the machine frame 26 as such. The sprocket wheels 16 and 17 are also freely sliding along their shafts 18 and 27 and are carried along by the movement of the frame section 23 by means of a fork 28, as shown in figure 4.

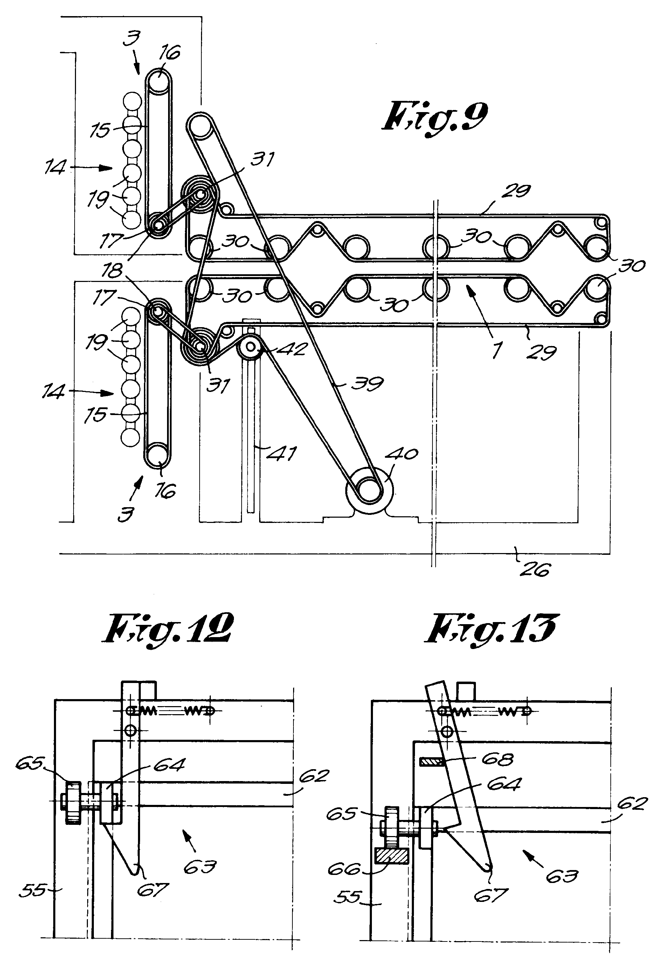

Aforementioned driving means for the transport of the formed finished product is factually being formed by a number of aforementioned rollers 7, more particularly these rolls which, as shown in figures 5 and 6, are power driven, for instance by means of a circular chain 29 which drives said rollers 7 via sprocket wheels 30 arid which in turn is being driven by means of a driven shaft 31. It is evident that a similar construction is provided for on the lower as well as on the upper parts.

The first rollers 7, between which the sheets 2 and layers 4 and 5 are guided, do not only act as rollers but as folding cylinder as well. On one of the following cylinder pairs, preferably at both edges of each roller, a folding ring or folding flange 32 is provided in order to fold the layers of coating material 4-5 over the edges of the sheets 2, as shown in figure 7, obviously when required for the finished product. Furthermore, guides, such as wooden strips 33, are preferably provided for, with which the folded parts 34 are being pressed for some time contacting the edges of sheets 2, until the layer of coating material 4, respectively 5, has sufficiently cooled down and is firmly attached to the base sheet 2. The excess material of parts 34 is cut away later on.

As can be seen in figures 1 and 8, the upper and lower part of the device, respectively, are movable with respect to one another by means of lifting devices 35, for instance formed by a screw spindle 36, provided with a crank 37 in which, on the one hand, the lower extremity of the screw spindle 36 rests freely on the frame of the lower part of the device and, on the other hand, in which this screw spindle 36 passes through a threaded mounting 38 at the upper part of the device. In this way sheets 2 of different thicknesses can be processed, for instance, as from one half of a centimeter through one half of a meter.

As shown in figure 9 aforementioned driven shafts 18 and 31, as well as chains 15 and 29, are drivers by means of a chain 39 which in turn is driven by an electric motor 40. A gear 42 movable along a guide 41 allows for chain 39 to be adjusted with respect to the adjustment of the lifting devices 35.

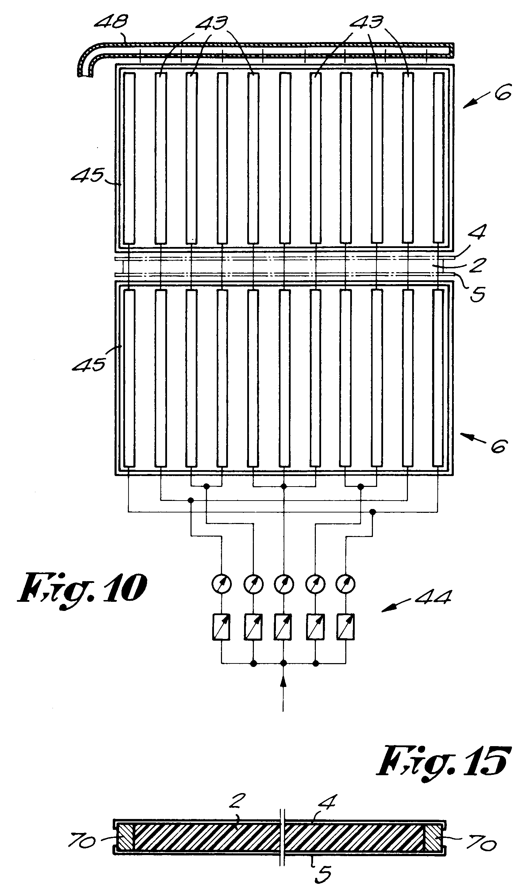

As schematically shown in figure 10, the heating means 6 preferably consist in multiple, broadwise arranged rows of infrared lamps 43 situated next to one another, which are connected individually or in groups with adjusting devices 44 for the admission of electric power, in such way that the desired temperatures, in layers 4 and 5 can be maintained. It is evident that a smaller loss of heat occurs at the centre of the embodiment, where consequently less power has to be fed to the interior rows 43 than to the outer rows. Behind the heating means 6 a reflector 45 is preferably located, while a removable protection sheet 46 can be provided for it. As shown in figures 1 and 10, between the upper heating means 6 and the concerned layer of coating material 4, air 47 is preferably blown in, towards the bottom, in order to achieve an uniform spread of heat. This could be for instance achieved by means of a perforated pipe 48 which is connected with a compressor 49.

The first rollers 7 are preferably cooled by means of blowing devices 50, such as fans, in order to avoid that they would reach a high temperature after some time, through which layers 4 and 5 would stick to these rollers 7.

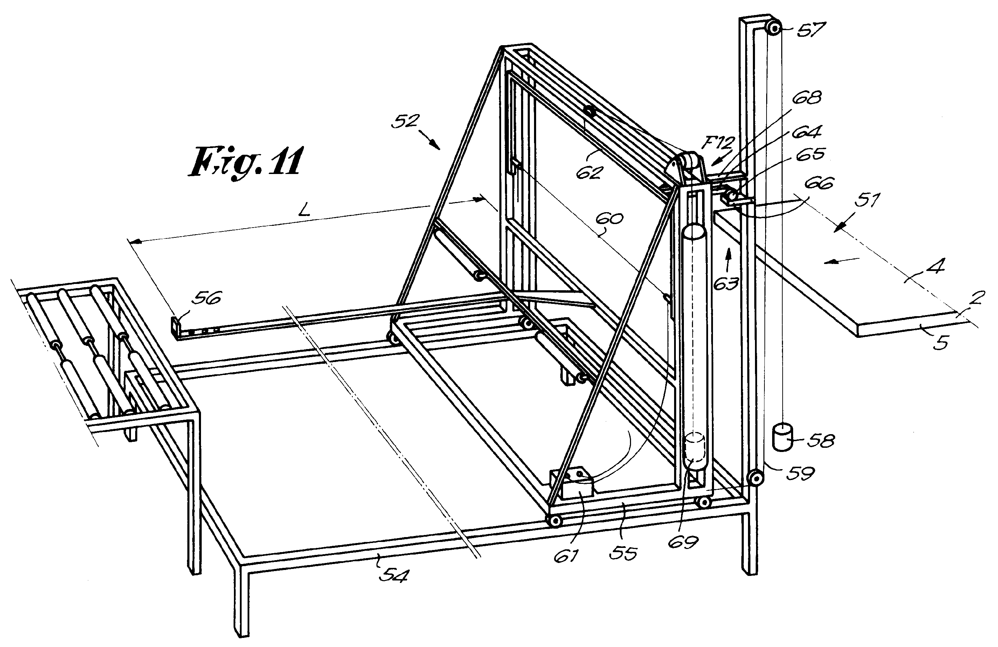

The coating device is preferably equipped, at the side where the formed finished product 51 leaves, as shown in figure 11, with an almost automatically operating cutting device 52, with which the finished product 51, regardless of the locations 53 where the sheets 2 join, can be separated in desired lengths L.

The cutting device 52 mainly consists in a frame 55, rolling over guides 54, which by means of an adjustable stop 56 and by means of the arriving product 51 can be moved in the direction of movement of latter and moving it in opposite direction by means of a weight 58 suspended to a pulley 57, which always forces the frame 55 into one direction by means of a cable 59, opposite to the movement of the product 51.

The factual cutting means consist in a filament 60, for instance connected with a battery 61, in which this filament 60 is installed in a frame 62, moving up and down, in the frame 55. In the initial position according to figure 11, the frame 62 is maintained in its highest position by means of stops 63 consisting in a support 64 connected with the frame 62 which rests by means of a small roller 65 or similar on a fixed stop 66.

The cutting device's 52 operation can be easily deduced from the drawing and consists in that the product 51 slides through the frame 55 until it meets the stop 56. From that moment on, frame 55 is carried along by the movement of the product 51 and the support 64 is released from the stop 66, in which frame 62 with the filament 60 falls onto the finished product 51 which melts, while frame 55 and product 51 continue their movement. When the product 51 is cut through, a sheet with a length L is produced which then has to be removed. The operator pulls the frame 55 a bit forward and pushes frame 62 with the filament 60 back up. Frame 62 will then hook onto an elastically movable stop 67, as shown in figure 12, in which, for instance, aforementioned support 64 hooks on. When the frame 55 is then released, it will roll back under the influence of the weight 58 to its initial position, in which the movable stop 67 is being pushed aside by means of a permanent stop 68, in such way as shown in figure 13, in which the support 64 together with the roller 65 will drop onto aforementioned stop 66. The dropping movement of the frame 62 can be limited by providing for a counterweight 69, in which the filament will land on the product 51 to be cut in a smooth downward movement.

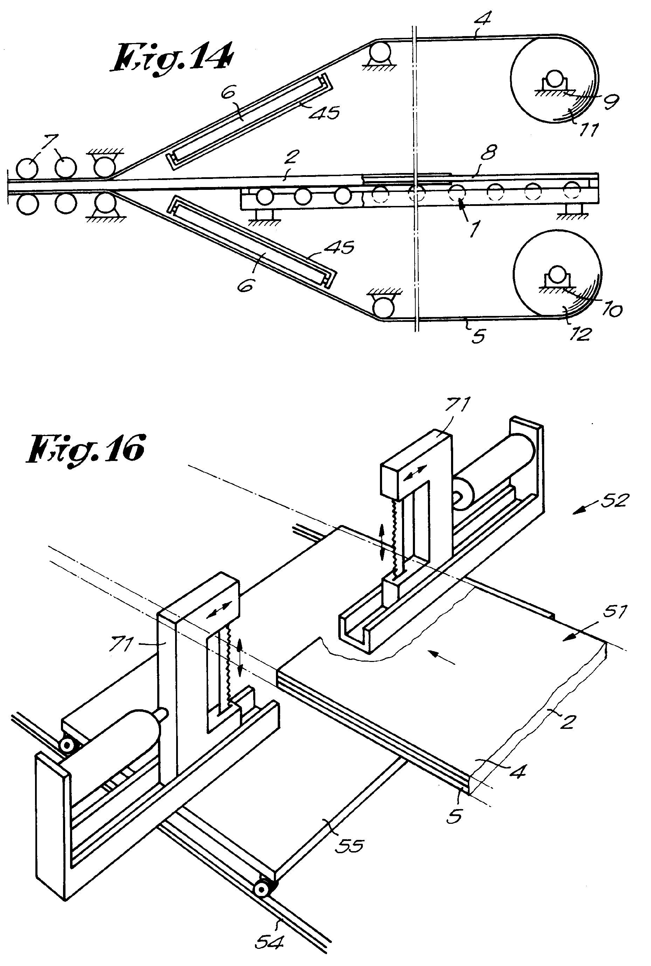

As shown in figure 14, the heating means 6 can, as well as the guiding means 14, not shown in this drawing, be located in such way that they provide for an inclined movement of layers 4 and/or 5, in which latter are being bent less sharply and substantially thick layers 4 and 5 can be applied, which in this case can be supplied either from reels 9 and 10 or in the form of sheets.

Figure 15 represents the product discussed in the introduction, in which at both edges of the sheets 2 wooden strips 70 are added, which in the aforementioned continuous process can be supplied to the machine together with sheets 2. Strips 70 are kept in location because the coating layers 4 and 5 are bent around these strips. It is evident that, in this case, automatic sawing machines 71 are placed at the discharging end of the embodiment, in such way as shown in figure 16. These sawing machines 71 will then saw off strips 70 whereupon the plastic parts can be cut afterward by means of, for instance, aforementioned filament 60.

Present invention is in no way limited to the embodiment described as an example and represented in the drawings, but such a procedure and installation for coating elements consisting in expanded plastic can be realized in all kinds of variants without leaving the scope of the invention.

## Claims

1. Procedure for coating an expanded plastic element comprising the steps of heating a coating layer (4,5) consisting of the same but non expanded material as said plastic element (2); pressing the heated layer (4,5) to the expanded plastic element (2) in such a way that the cooperating surfaces melt together forming a composite element; and cooling said composite element.

2. Procedure according to claim 1, characterized in that the pressing of the layer of coating material (4, 5), against the element (2) to be coated occurs in joining the heated layer (4, 5) in a forward movement with the element to be coated (2).

3. Procedure according to claim 1 or 2, characterized in that the heated layer of coating material (4, 5) is being rolled onto the surface of the element to be coated.

4. Procedure according to one of the aforementioned claims, characterized in that as material of the element to be coated (2) or elements to by coated (2) an expanded plastic is chosen within the types of insulation materials, more particularly materials such as expanded polystyrene, expanded polyethylene or similar materials.

5. Procedure according to one of aforementioned claims, more particularly for the forming of coated sheets, characterized in that the procedure is performed in a continuous process in which the element to be coated is formed by the succession of multiple sheets (2) in expanded plastic, and in which the layer pressed against it, respectively layers of coating material (4-5) are being taken from a reel, respectively reels (9-10).

6. Procedure according to one of the aforementioned claims, characterized in that aforementioned elements (2) are being coated at both sides according to aforementioned procedure.

7. Procedure according to claims 5 or 6, characterized in that the coating material (4-5) is being folded over the edges of the sheets (2) to be coated.

8. Procedure according to one of the claims 5 through 7, characterized in that during a continuous supply of sheets (2) wooden strips (70) are being supplied at the same time, in such way that the coating material (4, 5) is being folded over them.

9. Procedure according to one of the claims 5 through 8, characterized in that the formed product (51) is being separated in lengths (L) chosen at random regardless of the locations (53) where the sheets (2) in expanded plastic join together.

## Patentansprüche

1. Verfahren zum Beschichten eines geschäumten Kunststoffteils, umfassend die Stufen des Erhitzens einer Beschichtungslage (4, 5), die aus demselben, aber nicht geschäumten Material wie besagtes Kunststoffteil (2) besteht; des Pressens der erhitzten Lage (4, 5) an das geschäumte Kunststoffteil (2) derart, daß die aufeinandertreffenden Oberflächen zusammenschmelzen und somit ein Verbundelement bilden; und des Kühlens des besagten Verbundelements.

2. Verfahren nach Anspruch 1, dadurch gekennzeichnet, daß das Pressen der Beschichtungsmateriallage (4, 5) gegen das zu beschichtende Teil (2) durch Verbinden der erwärmten Lage (4, 5) mit dem zu beschichtenden Teil (2) in einer Vorwärtsbewegung vollzogen wird.

3. Verfahren nach Anspruch 1 oder 2, dadurch gekennzeichnet, daß die erwärmte Beschichtungsmateriallage (4, 5) auf die Oberfläche des zu beschichtenden Teils gerollt wird.

4. Verfahren nach einem der vorgenannten Ansprüche, dadurch gekennzeichnet, daß als Material des zu beschichtenden Elements (2) oder der zu beschichtenden Elemente (2) ein geschäumter Kunststoff aus der Gruppe der Isoliermaterialien gewählt wird, insbesondere Materialien wie etwa Polystyren, geschäumtes Polyäthylen oder ähnliche Materialien.

5. Verfahren nach einem der vorgenannten Ansprüche, insbesondere für das Formen beschichteter Bögen, dadurch gekennzeichnet, daß das Verfahren in einem kontinuierlichen Prozeß vollzogen wird, in welchem das zu beschichtende Teil durch die Aufeinanderfolge mehrerer Bögen (2) aus geschäumtem Kunststoff gebildet wird, und in welchem die dagegengepreßte Beschichtungsmateriallage beziehungsweise Lagen (4-5) von einer beziehungsweise mehreren Rollen (9-10) abgezogen werden.

6. Verfahren nach einem der vorgenannten Ansprüche, dadurch gekennzeichnet, daß die vorgenannten Teile (2) nach dem vorgenannten Verfahren auf beiden Seiten beschichtet werden.

7. Verfahren nach den Ansprüchen 5 oder 6, dadurch gekennzeichnet, daß das Beschichtungsmaterial (4-5) über die Kanten der zu beschichtenden Bögen (2) gefalzt wird.

8. Verfahren nach einem der Ansprüche 5 bis 7, dadurch gekennzeichnet, daß während einer kontinuierlichen Zufuhr von Bögen (2) gleichzeitig Holzleisten (70) zugeführt werden, derart, daß das Beschichtungsmaterial (4,5) über sie gefalzt wird.

9. Verfahren nach einem der Ansprüche 5 bis 8, dadurch gekennzeichnet, daß das geformte Produkt (51) ohne Berücksichtigung der Stellen (53), wo die Bögen (2) aus geschäumtem Kunststoff aneinanderstoben, in beliebig gewählte Längen (L) geteilt wird.

## Revendications

1. Procédé pour recouvrir un élément en plastique expansé, comprenant les étapes consistant à chauffer une couche de revêtement (4, 5) constituée de la même matière que celle dudit élément plastique (2), mais non expansée; à presser la couche chauffée (4, 5) contre l'élément (2) en plastique expansé de telle sorte que les surfaces coopérantes fondent mutuellement pour former un élément composite; et à refroidir ledit élément composite.

2. Procédé selon la revendication 1, caractérisé en ce que le pressage de la couche de matière de recouvrement (4, 5) contre l'élément (2) à recouvrir a lieu en joignant la couche chauffée (4, 5) à l'élément (2) à recouvrir au cours d'un mouvement vers l'avant.

3. Procédé selon la revendication 1 ou 2, caractérisé en ce que la couche chauffée de matière de recouvrement (4, 5) est enroulée sur la surface de l'élément à recouvrir.

4. Procédé selon l'une quelconque des revendications précédentes, caractérisé en ce que, à titre de matière de l'élément (2) à recouvrir ou des éléments (2) à recouvrir, on choisit un plastique expansé parmi les types de matières d'isolation, plus particulièrement des matières telles que le polystyrène expansé, le polyéthylène expansé ou des matières similaires.

5. Procédé selon l'une quelconque des revendications précédentes, plus particulièrement pour le façonnement de feuilles recouvertes, caractérisé en ce que le procédé est mis en oeuvre dans un processus en continu dans lequel l'élément à recouvrir est façonné par la succession de feuilles multiples (2) en plastique expansé, et dans lequel la couche, respectivement les couches de matières de recouvrement (4, 5), pressée(s) contre lui est (sont) retirée(s) d'un dévidoir, respectivement de dévidoirs (9, 10).

6. Procédé selon l'une quelconque des revendications précédentes, caractérisé en ce que les éléments susmentionnés (2) sont recouverts des deux côtés conformément au procédé susmentionné.

7. Procédé selon la revendication 5 ou 6, caractérisé en ce que la matière de recouvrement (4, 5) est repliée par-dessus les bords des feuilles (2) à recouvrir.

8. Procédé selon l'une quelconque des revendications 5 à 7, caractérisé en ce que, au cours d'une alimentation de feuilles (2) en continu, des traverses en bois (70) sont acheminées au même moment de telle sorte que la matière de recouvrement (4, 5) soit enroulée autour d'elles.

9. Procédé selon l'une quelconque des revendications 5 à 8, caractérisé en ce que le produit façonné (51) est séparé en longueurs (L) choisies de manière aléatoire indépendamment des endroits (53) où les feuilles (2) en plastique expansé sont jointes l'une à l'autre.
